# DEMANDE DE BREVET EUROPEEN

(11) **EP 1 178 022 A1**
(43) Date de publication de la demande: **06.02.2002**
(21) Numéro de dépôt: 01114396.3
(22) Date de dépôt: 14.06.2001
(51) Int. Cl.: C04B 18/04, C04B 14/08, C04B 38/00

(54) **Procédé de valorisation d'agents filtrants usagés constitués de fines particules minérales**

(30) Priorité: 14.06.2000 LU 90600
(71) Demandeur: BETONS FEIDT S.à.r.l., 1135 Luxembourg (LU); GREEN WORLD S.à.r.l., 7450 Lintgen (LU)
(72) Inventeur: Mechling, Jean-Michel, 54840 Sexey-les-Bois (FR); Lecomte, André, 54220 Matzeville (FR); Feidt, Ferdinand, 5884 Hesperange (LU); Devis, Roland, 9850 Nevele (BE); Scharfe, Guy, 8216 Mamer (LU); Steichen, Claude, 8612 Pratz (LU)
(74) Mandataire: Kihn, Pierre Emile Joseph

(57) **Abrégé**

Un procédé de valorisation d'agents filtrants usagés constitués de fines particules minérales propose d'incorporer ces fines particules minérales dans des mélanges hydrauliques tels que des bétons ou des mortiers.

Ce procédé est particulièrement intéressant pour valoriser des agents filtrants du type kieselguhrs usagés de brasseries.

## Description

### Introduction

La présente invention concerne un procédé de valorisation d'agents filtrants usagés constitués de fines particules minérales, notamment du type kieselguhr.

### Etat de la technique

Bon nombre de procédés de filtration industriels utilisent des agents filtrants constitués de fines particules minérales, notamment dans l'industrie alimentaire. Ces fines particules minérales sont généralement utilisées sous la forme de couches ou de lits filtrants. Un problème permanent est le devenir de ces fines particules minérales après usage.

Un exemple typique est celui des brasseries, qui utilisent comme agent filtrant un mélange de diatomites et de perlites, couramment dénommé kieselguhr. Les kieselguhrs sont employés comme agents filtrants en combinaison avec des filtres classiques, par exemple comme précouche sur le bâti de ces filtres pour éviter un colmatage trop rapide. Les kieselguhrs se chargent progressivement en matières organiques (par ex. levures de bière), et doivent donc être régulièrement remplacés.

Actuellement, une partie des kieselguhrs usagés sont utilisés comme engrais et sont donc épandus dans des champs agricoles. Mais la majeure partie des kieselguhrs usagés est stockée en décharge. Or, le stockage a des inconvénients, notamment liés aux odeurs et aux volumes importants de déchets, et ne sera plus possible à compter du 1er juillet 2002. En effet, les kieselguhrs risquent d'être classés dans la catégorie « R45 », des produits potentiellement dangereux par inhalation. Il serait donc avantageux de trouver une alternative au stockage en décharge des kieselguhrs usagés, qui ne constitue pas de risque pour la santé.

### Objet de l'invention (Problème à résoudre par l'invention)

L'objet de la présente invention est de proposer un procédé de valorisation d'agents filtrants usagés constitués de fines particules minérales, notamment du type kieselguhrs de brasseries. Conformément à l'invention, cet objectif est atteint par un procédé selon la revendication 1.

### Description générale de l'invention revendiquée avec ses principaux avantages.

Un procédé selon l'invention propose de valoriser des agents filtrants usagés constitués de fines particules minérales en les incorporant dans des mélanges hydrauliques tels que des bétons, des mortiers, ou dans du plâtre. Les agents filtrants usagés, dont le stockage peut être problématique, peuvent ainsi être par exemple incorporés en substitution d'une partie du sable, simplement en tant qu'addition minérale que l'on souhaite éliminer en l'incorporant dans un béton, mortier ou plâtre. En général, il n'est alors pas nécessaire de modifier la formulation de ces produits. Dès lors que les agents filtrants usagés sont pris dans un béton, mortier ou plâtre, ils ne risquent plus de se répandre en poussières, ni d'être inhalés. Il est clair que la quantité de fines particules minérales, c'est-à-dire d'agents filtrants usagés, que l'on ajoute dans ces produits doit être adaptée aux caractéristiques visées pour ce dernier. On pourra par exemple se conformer aux normes sur les bétons, qui prescrivent des quantités bien définies d'addition minérales. Ces agents filtrants usagés peuvent avoir une granulométrie de 1 à 1 000 µm.

On notera que certaines particules minérales de ces agents filtrants usagés peuvent avoir des propriétés pouzzolaniques, ce qui profite alors globalement au mélange hydraulique ou plâtre dans lequel elles sont incorporées. C'est notamment le cas lorsque les agents filtrants usagés comprennent principalement un mélange de diatomites et de perlites. En effet, diatomites et perlites sont capables, à température ambiante et en présence d'eau, de fixer la chaux pour former des phases hydratées stables. Les perlites et diatomites ne sont alors pas simplement éliminées, mais elles réagissent avec le mélange hydraulique, et sont par conséquent "assimilées" par ce dernier. L'incorporation d'agents filtrants usagés constitués de particules minérales aux propriétés pouzzolaniques peut permettre d'améliorer la résistance mécanique du béton ou mortier sans ajouter de ciment, ou de diminuer la dose en ciment en obtenant une résistance mécanique identique. De plus, la proportion de chaux libre dans le mélange hydraulique diminue, ce qui réduit les efflorescences à la surface du béton ou mortier. Dans le cas de l'incorporation d'agents filtrants usagés composés de perlites et de diatomites dans des bétons ou mortiers, les masses volumiques de ces derniers, ainsi que leurs modules d'élasticité sont diminués.

Suivant leur origine, les agents filtrants usagés peuvent être chargés de matières organiques. Un exemple d'agents filtrants chargés de matières organiques est celui des kieselguhrs, mélanges de diatomites et perlites, utilisés comme agents filtrants dans l'industrie alimentaire, notamment dans les brasseries.

On notera que, si la teneur en liquide des agents filtrants usagés est trop importante, ces derniers peuvent être essorés. Par essorage on entend toute technique mécanique permettant de débarrasser les agents filtrants usagés de l'excès de liquide qu'ils contiennent.

Selon un premier mode de réalisation, les agents filtrants usagés sont incorporés dans des mélange hydrauliques ou dans du plâtre avec les résidus de filtration qu'ils peuvent contenir. Selon les cas, les agents filtrants usagés peuvent être essorés avant incorporation.

Il peut s'agir de kieselguhrs usagés de brasseries par exemple, chargés en matières organiques. La présence de matières organiques produit un effet entraîneur d'air dans le mélange hydraulique ou le plâtre. Cet effet entraîneur d'air peut être avantageusement utilisé pour l'élaboration de bétons mousse ou mortiers mousse. Un béton ou mortier mousse est généralement élaboré à partir d'un mélange d'eau, de ciment, de sables, mais pas de graviers, dans lequel on ajoute des adjuvants afin d'entraîner de l'air dans le mélange lors du malaxage; bien qu'on parle couramment de béton mousse, il s'agit plus précisément de mortier mousse.

Un mérite de la présente invention est donc d'avoir mis en évidence l'effet entraîneur d'air inattendu qui est obtenu par l'incorporation de kieselguhrs usagés chargés en matières organiques, lors d'un malaxage approprié. On notera que dans le cas présent la diminution de densité est principalement due à l'air occlus et non pas à la faible densité du kieselguhr.

L'effet entraîneur d'air obtenu par l'incorporation des kieselguhrs usagés peut être avantageusement utilisé pour l'élaboration de béton ou mortiers mousse, mécaniquement peu sollicités et ayant certaines propriétés isolantes ou phoniques.

Selon un autre mode de réalisation, les kieselguhrs usagés de brasseries sont chauffés à une température entre 80 et 300°C, afin de les sécher et d'oxyder partiellement les matières organiques qu'il contiennent, notamment les composés volatils de type alcool, avant de les incorporer dans un mélange hydraulique ou du plâtre. Un tel traitement thermique permet une prise plus rapide du mélange hydraulique. En effet, un autre mérite de la présente invention est d'avoir remarqué qu'un tel traitement thermique entre 80 et 300°C permet d'oxyder une partie des matières organiques qui ont tendance à ralentir la prise du mélange hydraulique.

On notera en outre que l'élimination de matières organiques résultant du traitement thermique entre 80 et 300°C permet également de contrôler l'effet entraîneur d'air des kieselguhrs usagés.

De préférence, le traitement thermique se fera à une température entre 150 et 300°C, de manière plus préférée aux environs de 250°C, ce qui permet d'oxyder suffisamment de matières organiques pour améliorer sensiblement le temps de prise. On appréciera qu'un tel traitement thermique est beaucoup moins onéreux qu'une calcination classique, et permet pourtant d'obtenir des mélanges hydrauliques présentant une prise rapide.

Cet aspect est évidemment avantageux car dans un procédé de valorisation il est particulièrement souhaitable d'avoir de faibles coûts de traitement des matières usagées. Un tel traitement a également l'avantage de réduire sensiblement les odeurs provenant du béton ou mortier comprenant des kieselguhrs de brasseries.

On remarquera également qu'un traitement thermique entre 80 et 150°C, de préférence vers 105°C, permet d'éliminer essentiellement les composés volatils, source de mauvaises odeurs, afin d'améliorer la vitesse de prise, tout en conservant l'effet entraîneur d'air et en réduisant les odeurs désagréables.

Par ailleurs, on comprendra que le traitement entre 80 et 300°C des kieselguhrs usagés se révèle avantageux en ce qui concerne leur stockage, notamment puisque les odeurs sont réduites.

Selon un troisième mode de réalisation, les agents filtrants usagés sont calcinés pour éliminer toutes les matières organiques, après avoir été préférablement tout d'abord essorés par voie mécanique. La calcination se fait de préférence à une température de 400 à 800°C. Puis les agents filtrants calcinés sont incorporés dans des mélanges hydrauliques ou du plâtre. La calcination préalable des kieselguhrs usagés garantit une prise rapide du mélange hydraulique. De plus, l'effet entraîneur d'air est minimisé et les agents filtrants usagés sont éliminés par incorporation. Lorsque les fines particules minérales incorporées ont des propriétés pouzzolaniques, comme par exemple dans le cas de kieselguhrs usagés et calcinés, les propriétés du mélange hydraulique peuvent se voir améliorées, comme expliqué précédemment.

Avantageusement, les agents filtrants usagés calcinés sont ensuite densifiés dans de l'eau avant d'être incorporés dans des mélanges hydrauliques ou le plâtre. Cette mesure permet d'éviter la formation de poussières à partir de ces agents filtrants au cours de leur incorporation.

Afin d'améliorer la fluidité du mélange hydraulique, on lui ajoutera avantageusement un plastifiant adapté, de préférence dosé à saturation.

### Description à l'aide des Figures

D'autres particularités et caractéristiques de l'invention ressortiront de la description détaillée de quelques modes de réalisation avantageux présentés ci-dessous, à titre d'illustration, en se référant aux dessins annexés. Ceux-ci montrent:
- Fig.1:: graphique montrant la densité de mortiers en fonction de leur teneur en kieselguhrs usagés chargés de matières organiques incorporés directement après essorage ;
- Fig.2:: graphique illustrant la perte au feu d'échantillons de kieselguhrs usagés en fonction de la température de calcination (les courbes correspondent à deux rampes de température différentes) ;
- Fig.3:: graphique illustrant le gain de résistance à la compression apporté par l'incorporation des kieselguhrs dans deux types de bétons différents (B-25 et B-35), au bout de 28 jours ;
- Fig.4:: vue d'une diatomite calcinée, fortement attaquée, dans une pâte de ciment ;
- Fig.5:: vue de grains de perlite ayant partiellement réagi pour former des silicates calciques hydratés en « nid d'abeilles » ;
- Fig.6:: vue de diatomites fluxées ayant réagi pour former des silicates calciques hydratés en « nid d'abeilles » ;
- Fig.7:: vue d'une diatomée calcinée recouverte de silicates calciques hydratés qu'elle a formé en partie.

Le procédé selon l'invention se révèle particulièrement intéressant pour la valorisation, après usage, des kieselguhrs utilisés comme agents filtrants dans les brasseries, dont le stockage est problématique. Avant de décrire plus spécifiquement l'incorporation de ces kieselguhrs usagés dans des mélanges hydrauliques, c'est-à-dire des mélanges qui durcissent sous l'action de l'eau, on examinera tout d'abord leur nature et leur utilisation en filtration.

### 1. Les kieselguhrs

Les agents filtrants de beaucoup de liquides alimentaires sont souvent constitués de fines particules de diatomites et perlites, ce mélange étant couramment appelé kieselguhr.

Les diatomites sont des roches qui résultent du dépôt et de l'accumulation géologique de squelettes siliceux de micro-organismes alguaires appelés diatomées. Ces roches sont exploitées puis traitées industriellement avant de servir en filtration (séchage, calcination et broyages successifs). Selon la température de calcination, on distingue les diatomites calcinées (température de 600-900°C) et les diatomites fluxées (température de 1000°C en présence d'un fondant). De manière générale, les diatomites sont très riches en silice, avec la présence d'un peu d'alumine et de fer, essentiellement. Les diatomites fluxées comportent toutefois une proportion relativement importante de sodium, qui provient du fondant avec lequel elle est mélangée puis portée à haute température (1000 à 1100°C) au cours du traitement industriel.

Les perlites sont des roches volcaniques du même nom qui ont subi une fragmentation thermique à la flamme destinée à produire des éléments de petite taille. Elles sont riches en silice, alumine et en éléments alcalins (potassium et sodium).

D'un point de vue minéralogique, la perlite est un verre siliceux ne comportant pas de phases cristallisées (minéraux). Les diatomites calcinées sont principalement constituées d'opale (silice amorphe plus ou moins hydratée) et contiennent également une petite proportion de quartz (silice cristallisée) et de cristobalite (polymorphe du quartz formé au cours de la calcination à haute température utilisée pour la fabrication des diatomites fluxées).

Les perlites utilisées par les brasseries ont de nombreuses particules de grande taille (100 à 200 µm) et présentent de ce fait des granulométries assez grossières avec un d₅₀ d'environ 70 µm (c'est-à-dire que 50% de la masse de l'échantillon mesuré a une granulométrie inférieure ou égale à 70 µm). Les diatomites calcinées présentent des granulométries plus fines avec un d₅₀ proche de 10 µm. Les diatomites fluxées ont des granulométries intermédiaires (d₅₀ de 20 µm) et sont constituées par des amas de diatomées, entiers ou fragmentés, soudés entre eux.

### 2. Les kieselguhrs des brasseries

Dans les filtres de brasseries, les diatomites fluxées et les perlites, de tailles plus grossières que les diatomites calcinées, sont employées comme précouche sur le bâti des filtres, afin d'éviter un colmatage trop rapide de ces derniers. Les diatomites calcinées ont un fort pouvoir de filtration en raison de leurs nombreuses perforations et de leur grande porosité interne, et sont utilisées durant toute la filtration.

Avant leur utilisation comme agents filtrants, les diatomites et perlites se présentent sous forme d'une fine poudre de couleur rose saumon ou blanche. Après usage leur couleur est grisâtre car elles sont gorgées d'eau et de matières organiques. Les teneurs en matières organiques de ces kieselguhrs usagés sont variables en fonction des brasseries et des procédés de filtration utilisés. Ces matières organiques sont essentiellement des résidus de drêches et de fermentation (levures).

Selon la technique utilisée par les brasseries, la consistance de ces agents filtrants usagés est soit une pâte gélatineuse dont la teneur en eau avoisine les 200% (utilisation de filtres à bougies nettoyés avec une forte quantité d'eau) soit une terre humide (utilisation de filtres-presses).

### 3. Incorporation des kieselguhrs usagés dans les mélanges hydrauliques

L'incorporation des kieselguhrs usagés de filtration dans les mélanges hydrauliques peut se faire directement, c'est-à-dire sans éliminer les matières organiques qu'ils contiennent. On peut également soumettre les kieselguhrs usagés à un traitement de calcination pour éliminer ces matières organiques.

### 3.1 Essorage

Les kieselguhrs usagés sont prélevés sur les installations de filtration. Si leur teneur en eau est trop importante, ils peuvent être essorés au moyen d'un filtre-presse fixe ou mobile. Cette étape d'essorage est surtout réalisée avec les kieselguhrs usagés destinés à être calcinés avant leur incorporation dans un mélange hydraulique.

### 3.2 Incorporation directe des kieselguhrs

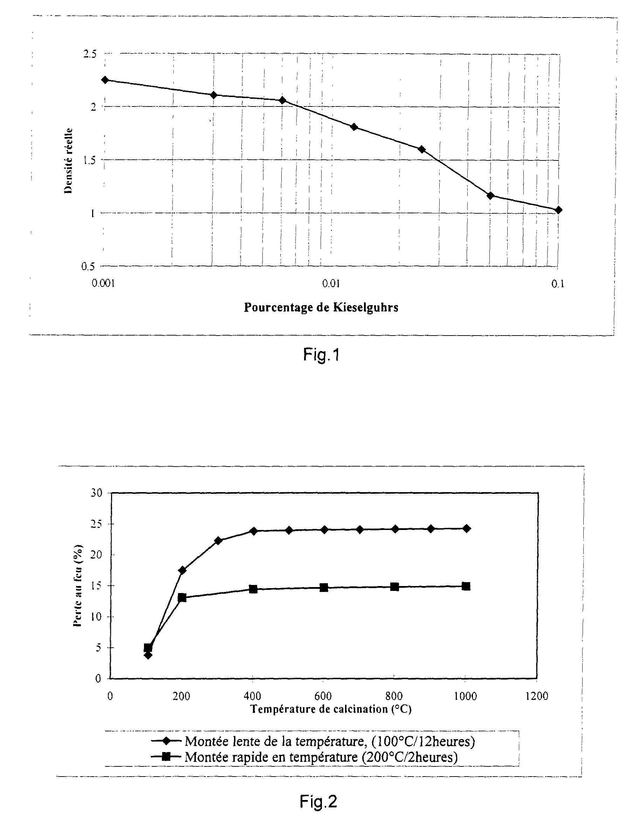

Il est possible de fabriquer des mélanges hydrauliques, de type béton ou mortier mousse, en incorporant des kieselguhrs usagés chargés de matières organiques. Comme le montre la Fig.1, la densité des mortiers frais décroît alors en fonction de la proportion de kieselguhrs incorporée. En effet, l'incorporation de kieselguhrs usagés produit un effet entraîneur d'air, c'est à dire qu'une important quantité d'air se trouve enfermée dans le mélange hydraulique à la fin du malaxage.

On notera que la réduction de densité qui serait obtenue par simple substitution d'une partie d'agrégats légers ou de sables légers par des kieselguhrs (de faible densité) n'est pas comparable avec la réduction de densité due à l'effet entraîneur d'air qui est obtenu par l'incoporation de kieselguhrs usagés de brasserie et un malaxage adéquat du mélange hydraulique.

Cet effet entraîneur d'air peut être avantageusement utilisé pour l'élaboration de bétons ou mortiers mousse, mécaniquement peu sollicités, utilisables comme produits ré-excavables de comblement de tranchées par exemple. Suffisamment compacts et résistants, ils peuvent alors avantageusement remplacer les granulats de remblais qui nécessitent en outre un travail de mise en oeuvre et présentent parfois des problèmes de stabilité dans le temps. De plus, ces mortiers possèdent des propriétés isolantes ou phoniques.

### Mode d'incorporation:

Les kieselguhrs usagés sont utilisés de préférence dans l'état dans lequel ils sont prélevés à la brasserie, c'est-à-dire avec une teneur en liquide (eau, traces d'alcool...) oscillant entre 200 et 500 %. Il est préférable de les homogénéiser avant leur incorporation dans les bétons et mortiers mousse.

L'ajout des kieselguhrs usagés est de l'ordre de 5 à 50 kg de produit sec, non calciné, par mètre cube de mortier. Incorporés à un mélange faiblement dosé en ciment, comportant de l'eau (200 à 400 litres par mètre cube de mortier) et du sable, le produit final est une mousse fluide, auto-plaçante (qui ne nécessite pas de nivelage ni de compactage), comportant 100 à 400 litres d'air par mètre cube de mortier obtenu par malaxage. La durée de malaxage peut varier entre 30 s et 3 min, influençant la quantité d'air occlus.

Des adjuvants classiques peuvent être rajoutés pour influencer, par exemple, le temps de prise ou le durcissement de ces bétons et mortiers mousse.

### 3.3 Incorporation des kieselguhrs après traitement

### 3.3.1 calcination

Une fois les kieselguhrs essorés, on les soumet à un traitement de calcination pour éliminer les matières organiques.

Les kieselguhrs essorés sont de préférence d'abord séchés, par exemple au moyen d'un matériel classique destiné au séchage des poudres et équipé pour retenir les kieselguhrs en suspension. En effet, les kieselguhrs secs forment facilement des poussières.

L'étape suivante est donc la calcination, qui est envisageable dans divers types de fours industriels. Ils seront avantageusement munis de filtres destinés d'une part à retenir les kieselguhrs, et d'autre part à retraiter les gaz issus de la combustion des matières organiques (odeurs, impuretés). Afin d'assurer une calcination rapide, il est préférable d'agiter les kieselguhrs en cours de calcination et d'apporter un flux d'air ou d'oxygène pour activer la combustion, sous réserve des précautions d'usage en la matière.

Des essais de calcination sur des kieselguhrs usagés préalablement séchés a montré que la majeure partie des matières organiques est calcinée entre 105 et 400°C, comme on peut le voir sur la Fig.2. Au-delà de 400°C, les pertes de masse deviennent négligeables. On notera de plus que les matières organiques sont rapidement détruites. Dans les conditions défavorables d'un four statique de laboratoire, plus des 3/4 de la matière organique est éliminé dans la première demi-heure du traitement, et la totalité est détruite au-delà de 2,5 à 3 heures.

Par conséquent, on soumettra de préférence les kieselguhrs usagés à une calcination à une température comprise entre 400°C et 800°C pendant une durée adaptée au type de four (statique, rotatif...) et à la proportion de matières organiques contenue. En four statique, c'est-à-dire non aéré et sans malaxage des kieselguhrs, la durée de calcination peut atteindre 2 à 2,5 heures.

On notera que ce traitement de calcination ne modifie pas les propriétés des kieselguhrs. En effet, des essais comparatifs menés sur certains des kieselguhrs avant utilisation en filtration et sur ces mêmes kieselguhrs usagés et calcinés à 500°C ne font pas apparaître de différences sensibles. Plus précisément, ces essais ont porté sur la densité, la demande en eau, les transformations minéralogiques, la granulométrie, et la morphologie.

### 3.3.2 Mode d'incorporation

Si l'on se réfère à la norme française P 18-305, des fumées de silice ou des fillers siliceux (auxquels peuvent être assimilés les kieslguhrs) ne doivent pas être incorporés à plus de 10% de la masse de ciment. Dans la plupart des bétons courants, cela représente un dosage de kieselguhrs (masse sèche) de l'ordre de 30 à 35 kg par mètre cube de béton.

Pour palier au problème très important d'absorption d'eau de ces poudres (comprise entre 20 et 45% en masse), les kieselguhrs calcinés sont avantageusement densifiés dans de l'eau pour former une pâte fluide avant d'être incorporés dans un mélange hydraulique. Le but est de saturer préalablement les particules de kieselguhr et de former un coulis facilement incorporable dans les gâchées. On élimine ainsi le problème de la très grande dispersion de la poudre de kieselguhrs dans l'air, donc du danger que représente son inhalation.

Le volume d'eau mélangé avec les kieselguhrs est de préférence largement supérieur à celui requis pour satisfaire l'absorption des particules. La teneur en eau finale visée est de l'ordre de 200%. Afin d'éviter la décantation des particules, on remue lentement et en permanence le coulis avec un système de pales rotatives (semblable par exemple au matériel employé dans les brasseries pour préparer les kieselguhrs avant leur injection dans la bière).

### 3.3.3 Réactivité des kieselguhrs

De par leur composition chimique et minéralogique, les diatomites calcinées, les diatomites fluxées et les perlites s'avèrent être des pouzzolanes. En effet, des essais de réactivité ont montré qu'à température ambiante et en présence d'eau, elles sont capables de fixer la chaux, pour former des phases hydratées stables. Le présent procédé de valorisation permet donc non seulement d'éviter le stockage des kieselguhrs usagés en les éliminant dans un mélange hydraulique, mais en plus ce dernier les "assimile". En effet, les particules les particules minérales qui réagissent avec la chaux disparaissent, tout au moins partiellement.

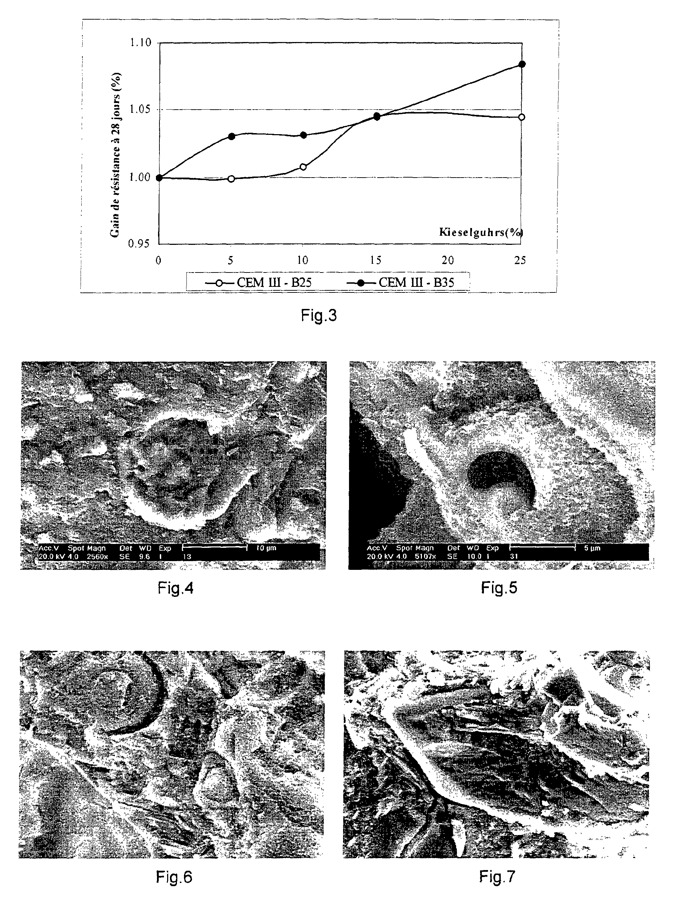

Les trois composés qui forment les kieselguhrs ont toutefois des réactivités différentes. L'opale est bien plus réactive que la perlite et la cristobalite car elle consomme plus de chaux pour former des silicates calciques hydratés (CSH). Les observations par microscopie électronique à balayage (MEB) montrent cette grande réactivité et des comportements distincts dans la liaison pâte de ciment-pouzzolane. A 150 jours, les grains de perlite sont encore facilement observables et il existe une auréole de transition avec la pâte de ciment (Fig.5). Les diatomites sont plus difficilement observables (cristobalite, Fig.6 et 7), voire inobservables (opale, Fig.4) ce qui traduit une parfaite incorporation, voire une disparition, des fragments encore restants dans la pâte de ciment durci.

Ainsi, les pouzzolanes réagissent avec la chaux pour former des CSH. Cette consommation de chaux est susceptible d'entraîner une meilleure hydratation du clinker et une diminution de la chaux libre dans la pâte de ciment durci. L'avantage industriel d'un tel phénomène est aussi une diminution des efflorescences à la surface du béton. Les essais réalisés sur les mortiers montrent qu'un ajout de pouzzolane en remplacement de 10% en volume de ciment, est suffisant pour engendrer une diminution sensible de la chaux libre.

### 3.3.4 Impact sur les mélanges hydrauliques

L'incorporation de kieselguhrs usagés et calcinés dans des bétons ne perturbe pas leurs propriétés à l'état frais. Pour des formules de bétons comparables (même dosage en ciment et squelette granulaire ne différant que par le volume de kieselguhrs incorporés), le volume d'air occlus et la maniabilité des gâchées (avec et sans kieselguhrs) sont voisines.

Pour les bétons durcis, l'incorporation de kieselguhrs usagés calcinés génère des aspects bénéfiques qui sont notamment :
(1) L'élimination, voir même "l'assimilation", d'un déchet. En effet, les kieselguhrs peuvent être facilement incorporés dans un béton sans que cela nuise à sa qualité.
(2) L'amélioration des résistances mécaniques et/ou la diminution du dosage en ciment. Au niveau de la résistance à la compression, l'incorporation de 25 à 30 kg de kieselguhrs est équivalent à 15 à 20 kg de ciment de qualité ordinaire. Il est donc possible d'améliorer les résistances mécaniques, sans apporter de ciment supplémentaire (Fig.3) ou de diminuer le dosage en ciment tout en restant avec des performances mécaniques égales. Toutefois on ajoutera avantageusement dans le béton un plastifiant adapté, de préférence dosé à saturation.
(3) L'amélioration de certaines propriétés des bétons. Les kieselguhrs recyclés permettent de diminuer la masse volumique des bétons et leur module d'élasticité. Ils sont susceptibles de limiter l'apparition d'efflorescences, voire de diminuer la perméabilité aux ions chlorure.

### 3.4 Incorporation après séchage

Un troisième mode d'incorporation des kieselguhrs usagés de brasseries consiste à les soumettre à un traitement thermique à faible température avant de les introduire dans un mélange hydraulique. Ce traitement thermique, qui est effectué à une température entre 80 et 300°C, vise à sécher les kieselguhrs et à en éliminer partiellement les matières organiques. Un tel traitement permet notamment d'éliminer les composés volatils tels que les alcools et permet une prise plus rapide du mélange hydraulique.

Il s'avère qu'un traitement entre 150 et 300°C, de préférence à environ 250°C, permet d'oxyder suffisamment de matières organiques pour améliorer le temps de prise et réduire également l'effet entraîneur d'air. Les kieselguhrs usagés ainsi traités pourront convenir pour des bétons ou mortiers classiques, ou du plâtre. Un tel traitement a également l'avantage de réduire sensiblement les odeurs provenant du béton ou mortier comprenant les kieselguhrs de brasseries.

Par ailleurs, un traitement thermique entre 80 et 150°C, de préférence à 105°C, permet d'oxyder suffisamment de matières organiques pour avoir une prise rapide du mélange, tout en conservant l'effet entraîneur d'air, ce qui est avantageux pour la réalisation de bétons mousse ou mortiers mousse.

Enfin, il faut noter que les Kieselguhrs sont des produits naturels, dont les propriété peuvent varier. De même, les propriétés des Kieselguhrs provenant de la filtration des brasseries peuvent varier selon leurs origines, notamment en fonction du type et des proportions des matières organiques qu'ils contiennent. Il est donc clair qu'il faudra adapter les différents paramètres des traitements proposés ci-dessus (points 3.2, 3.3 et 3,4) afin d'obtenir un mélange hydraulique ayant les propriétés souhaitées.

## Revendications

1. Procédé de valorisation d'agents filtrants usagés constitués de fines particules minérales **caractérisé en ce qu'**on incorpore ces fines particules minérales dans du plâtre ou des mélanges hydrauliques tels que des bétons ou des mortiers.

2. Procédé selon la revendication 1, **caractérisé en ce que** les agents filtrants usagés comprennent principalement un mélange de diatomites et de perlites.

3. Procédé selon la revendication 2, **caractérisé en ce que** les agents filtrants usagés sont chargés de matières organiques.

4. Procédé selon la revendication 3, **caractérisé en ce que** les agents filtrants usagés sont des agents filtrants du type kieselguhr provenant de l'industrie alimentaire, notamment des brasseries.

5. Procédé selon l'une quelconque des revendications 2 à 4, **caractérisé en ce que** les agents filtrants usagés sont incorporés dans du plâtre ou des mélanges hydrauliques du type béton mousse ou mortier mousse.

6. Procédé selon la revendication 5, **caractérisé en ce que** les agents filtrants usagés sont d'abord essorés avant d'être incorporés dans des mélanges hydrauliques mousse ou du plâtre.

7. Procédé selon la revendication 3 ou 4, **caractérisé en ce que** les agents filtrants usagés sont calcinés pour éliminer les matières organiques avant d'être incorporés dans des mélanges hydrauliques ou dans du plâtre.

8. Procédé selon la revendication 7, **caractérisé en ce que** les agents filtrants usagés sont d'abord essorés avant d'être calcinés.

9. Procédé selon la revendication 7 ou 8, **caractérisé en ce que** les agents filtrants usagés calcinés sont ensuite densifiés dans de l'eau avant d'être incorporés dans des mélanges hydrauliques ou dans du plâtre.

10. Procédé selon la revendication 7, 8 ou 9, **caractérisé en ce que** les agents filtrants usagés sont calcinés à une température de 400 à 800°C.

11. Procédé selon la revendication 3 ou 4, **caractérisé en ce que** les agents filtrants usagés sont soumis à un traitement thermique entre 80 et 300°C afin de les sécher et d'oxyder partiellement les matières organiques.

12. Procédé selon la revendication 11, **caractérisé en ce que** les agents filtrants usagés séchés sont incorporés dans du plâtre ou des mélanges hydrauliques du type béton mousse ou mortier mousse.

13. Procédé selon l'une quelconque des revendications précédentes, **caractérisé en ce que** les agents filtrants usagés ont une granulométrie de 1 à 1 000 µm.

14. Procédé selon l'une quelconque des revendications précédentes, **caractérisé en ce que** l'on ajoute au mélange hydraulique un plastifiant adapté, de préférence dosé à saturation.

15. Utilisation d'un béton mousse ou mortier mousse fabriqué selon la revendication 5, 6, 11 ou 12, comme remblai, isolant phonique ou thermique.
